# EUROPÄISCHE PATENTSCHRIFT

(11) **EP 2 835 328 B1**
(45) Veröffentlichungstag und Bekanntmachung des Hinweises auf die Patenterteilung: **27.04.2016**
(21) Anmeldenummer: 14176640.2
(22) Anmeldetag: 11.07.2014
(51) Int. Cl.: B65G 21/10

(54) **Umlenkvorrichtung für eine Förderkette mit gesonderter Kettenführung**
Deflection device for a conveyor chain with separate chain guide
Dispositif de déviation pour une chaîne de transport doté d'un guide-chaîne sectionné

(30) Priorität: 09.08.2013 DE 102013215751
(43) Veröffentlichungstag der Anmeldung: 11.02.2015
(73) Patentinhaber: ROBERT BOSCH GMBH, 70442 Stuttgart (DE)
(72) Erfinder: Guener, Till, 70376 Stuttgart (DE)
(74) Vertreter: Maiß, Harald

(56) Entgegenhaltungen:
- EP-A2- 1 654 175
- EP-B1- 1 301 423
- WO-A2-2012/001538

## Beschreibung

Die Erfindung betrifft eine Kollektion von Umlenkvorrichtungen gemäß dem Oberbegriff von Anspruch 1.

Aus der EP 1 301 423 B1 ist eine Umlenkvorrichtung für eine Förderkette bekannt. Die Umlenkvorrichtung umfasst zwei gegenüberliegende Wandelemente, die spiegelbildlich zueinander ausgebildet sind. In jedem Wandelement ist ein Aufnahmeraum für ein Drehlager vorgesehen, in dem ein Umlenkrad bezüglich einer Drehachse drehbar gelagert ist, wobei das Umlenkrad zwischen den Wandelementen angeordnet ist. Das Umlenkrad greift in die Förderkette ein, um diese um die Drehachse umzulenken. Weiter ist beiden Wandelementen jeweils eine gesonderte Kettenführung zugeordnet, die über Rasthaken fest mit dem zugeordneten Wandelement verbunden ist. Die Kettenführungen weisen aufeinander zu und greifen seitlich in die Förderkette ein. An beiden Enden der beiden Kettenführungen ist jeweils ein erster bzw. ein zweiter Übergangsabschnitt vorgesehen, der dünner als die verbleibende Kettenführung ausgebildet ist. An dem zugeordneten Wandelement ist ein Führungssteg einstückig vorgesehen, welcher den ersten Übergangsabschnitt fluchtend und geradlinig bis zu einer Stirnfläche des zugeordneten Wandelements fortsetzt, wobei er eine Förderrichtung definiert, die senkrecht zur Drehachse ausgerichtet ist. An der genannten Stirnfläche wird ein gesondertes Tragprofil für die Förderkette befestigt, welches sich mit einer konstanten Querschnittsform in Förderrichtung erstreckt. An dem Tragprofil setzt sich der Führungssteg weiter fort. Auf den Führungssteg und die Übergangsabschnitte wird eine gesonderte Gleitleiste aufgeschnappt, wie sie beispielsweise aus der EP 1 301 422 B1 bekannt ist. Die Breite der Gleitleiste quer zur Förderrichtung entspricht der Breite der verbleibenden Kettenführung.

Der Nachteil der bekannten Umlenkvorrichtung besteht darin, dass es Probleme bereitet, das Umlenkrad mit einem Elektromotor anzutreiben, um die Förderkette in Bewegung zu setzen. Aufgrund der Antriebskräfte wird die Förderkette auf der einen Seite des Umlenkrades auseinander gezogen, wobei sie auf der anderen Seite zusammengedrückt wird. Dabei ist es erforderlich, der Förderkette genügend Freiraum zur Verfügung zu stellen, um das Spiel zwischen den Kettengliedern der Förderkette auszugleichen. Eben dieser Freiraum steht bei der bekannten Umlenkvorrichtung nicht zur Verfügung und kann durch einfache Umbauten auch nicht bereit gestellt werden.

Aus der WO 2012/001538 A2 und der WO 2005/009874 A2 sind weitere Umlenkvorrichtungen bekannt.

Der Vorteil der erfindungsgemäßen Kollektion von Umlenkvorrichtungen besteht darin, dass viele Einzelteile identisch sowohl für eine erste Ausführungsform verwendet werden können, bei der das Umlenkrad nicht angetrieben ist, als auch für eine Ausführungsform, bei der das Umlenkrad von einem Elektromotor angetrieben wird. Dementsprechend können die genannten Einzelteile in größerer Stückzahl und damit kostengünstiger hergestellt werden.

Die Erfindung ist dadurch gekennzeichnet, dass der zweite Übergangsabschnitt an der Stirnfläche des zugeordneten Wandelements endet, wobei er spiegelbildlich zum Führungssteg ausgebildet ist. Gegenüber der EP 1 301 423 B1 ist am zweiten Übergangsabschnitt kein Führungssteg am zugeordneten Wandelement vorgesehen. Dementsprechend reicht es aus, allein die Kettenführungen zu verändern, um die beiden genannten Ausführungsformen zur Verfügung zu stellen. Eine Veränderung insbesondere an den aufwändigen Wandelementen, die vorzugsweise im Druckgussverfahren hergestellt werden, ist nicht erforderlich.

Bei der ersten, nicht angetriebenen Ausführungsform umfassen beide Kettenführungen jeweils ein einziges erstes Führungsteil, an dem der erste und der zweite Übergangsabschnitt einstückig ausgebildet ist, wobei das erste Führungsteil die Drehachse des Umlenkrades ununterbrochen umgibt. Das erste Führungsteil besteht vorzugsweise aus Kunststoff, höchst vorzugsweise aus Polyoxymethylen, damit zwischen der Förderkette und der Kettenführung wenig Reibung entsteht. Die Kettenführung weist vorzugsweise einen Ausrichtsteg und/oder wenigstens einen Ausrichtzapfen auf, mit dem sie am zugeordneten Wandelement anliegt, so dass sie formschlüssig ausgerichtet ist. Die Kettenführung ist vorzugsweise mit dem zugeordneten Wandelement verschraubt.

Bei der zweiten, angetriebenen Ausführungsform umfassen beide Kettenführungen jeweils ein zweites und ein gesondertes drittes Führungsteil, wobei der erste Übergangsabschnitt am zweiten Führungsteil und der zweite Übergangsabschnitt am dritten Führungsteil einstückig ausgebildet sind, wobei das zweite und das dritte Führungsteil mit Abstand zueinander enden. Zwischen den beiden Führungsteilen ist damit ein Bereich vorhanden, in dem die Förderkette nicht geführt ist. Dort bildet sich aufgrund der Schwerkraft ein sogenannter Kettensack aus, d.h. die Förderkette bildet eine U-förmige Schlaufe. Die Größe dieses Kettensacks ist abhängig von dem zeitlich veränderlichen Spiel in der Förderkette und der Gesamtlänge der Förderkette. Aufgrund der fehlenden Seitenführung der Förderkette kann sich die Größe des Kettensacks je nach Bedarf einstellen, ohne dass die Bewegung der Förderkette gestört wird. Gegenüber der ersten Ausführungsform muss nur das einteilige erste Führungsteil durch das zweite und das gesonderte dritte Führungsteil ersetzt werden. Alle übrigen Teile der Umlenkvorrichtung können identisch verwendet werden.

In den abhängigen Ansprüchen sind vorteilhafte Weiterbildungen und Verbesserungen der Erfindung angegeben.

Vorzugsweise ist das Umlenkrad ein Zahnrad, welches in Drehantriebsverbindung mit einem Elektromotor steht. Hierdurch wird der Antrieb des Umlenkrades und mithin der Antrieb der Förderkette ermöglicht. Bei der ersten, nicht angetriebenen Ausführungsform könnte auch ein bezüglich der Drehachse rotationssymmetrisches Umlenkrad zum Einsatz kommen. Um die Anzahl der Gleichteile zu erhöhen und mithin die Kosten zu senken, ist es jedoch bevorzugt, wenn bei beiden Ausführungsformen das vorgeschlagene Zahnrad identisch zum Einsatz kommt.

Vorzugsweise umgibt das zweite Führungsteil die Drehachse über einen Winkel von 90°. Üblicherweise verläuft die Förderrichtung senkrecht zur Richtung der Schwerkraft. Aufgrund des vorgeschlagenen Umlenkwinkels wird die Förderkette in Richtung der Schwerkraft umgelenkt. Nach dem Ende des zweiten Führungsteils bewegt sich die Förderkette allein aufgrund der Schwerkraft ohne Richtungswechsel senkrecht nach unten weiter, wobei die Kettenglieder im Rahmen des Kettenspiels auseinander gezogen werden. Damit wird die Förderkette am Umlenkrad nicht einmal abschnittsweise auf ihre minimale Länge zusammengedrückt. Störungen des Kettenablaufs sind daher nicht zu befürchten.

Vorzugsweise endet das dritte Führungsteil in Richtung der Drehachse betrachtet außerhalb des äußersten Umrisses des Umlenkrades. Hierdurch wird vermieden, dass die Förderkette, ehe sie in das das dritte Führungsteil einfädelt, mit dem Umlenkrad zusammenstößt und so dessen Bewegung stört. Der Abstand zwischen dem genannten Umriss und dem dritten Führungsteil wird vorzugsweise so groß ausgelegt, dass eine unbeabsichtigte Berührung zwischen der Förderkette und dem Umlenkrad sicher ausgeschlossen ist.

Vorzugsweise ist das dritte Führungsteil an dem dem zweiten Übergangsabschnitt gegenüberliegenden Ende spitz zulaufend ausgebildet. Hierdurch wird ein störungsfreies Einfädeln der Förderkette auf das dritte Führungsteil erreicht.

Vorzugsweise liegt an beiden Wandelementen jeweils eine gesonderte Verbindungsleiste, vorzugsweise innen an, welche über die Stirnfläche des zugeordneten Wandelements übersteht.

Vorzugsweise sind zwischen den beiden Verbindungsleisten wenigstens ein, vorzugsweise zwei gesonderte Abstandhalter angeordnet. Über die Breite der vorzugsweise besonders einfach aufgebauten Abstandhalter kann die Umlenkvorrichtung kostengünstig an unterschiedlich breite Förderketten angepasst werden. Die vergleichsweise teuren Wandelemente können auch bei unterschiedlich breiten Förderketten identisch verwendet und somit in großen Stückzahlen kostengünstig hergestellt werden.

Vorzugsweise ist an beiden Wandelementen, vorzugsweise außen jeweils eine gesonderte Abdeckplatte befestigt, welche quer zur Drehachse zumindest im Bereich des Abstands zwischen dem zweiten und dem dritten Führungsteil über das zugeordnete Wandelement übersteht. Durch die Abdeckplatte wird vermieden, dass Fremdkörper in den Freiraum zwischen der Umlenkvorrichtung und der Förderkette im Bereich des Kettensacks gelangen. Hierdurch sollen insbesondere auch Verletzungen bei dem Bedienpersonal der Fördervorrichtung verhindert werden. Bei der Abdeckplatte handelt es sich vorzugsweise um eine ebene Platte mit konstanter Dicke. Vorzugsweise besteht die Abdeckplatte aus Stahl oder Aluminium.

Die Erfindung wird im Folgenden anhand der beigefügten Zeichnungen näher erläutert. Es stellt dar:
- Fig. 1: eine Explosionsansicht einer ersten Ausführungsform einer Umlenkvorrichtung der erfindungsgemäßen Kollektion;
- Fig. 2: eine Explosionsansicht einer zweiten Ausführungsform einer Umlenkvorrichtung der erfindungsgemäßen Kollektion;
- Fig. 3: eine Explosionsansicht einer dritten Ausführungsform einer Umlenkvorrichtung der erfindungsgemäßen Kollektion; und
- Fig. 4: eine Explosionsansicht einer vierten Ausführungsform einer Umlenkvorrichtung der erfindungsgemäßen Kollektion.

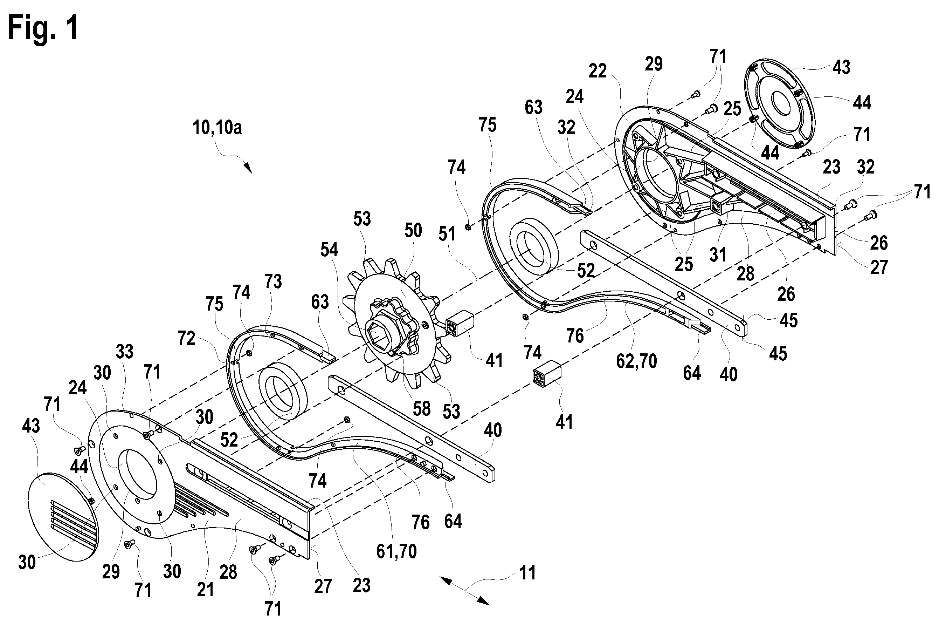

Fig. 1 zeigt eine Explosionsansicht einer ersten Ausführungsform 10a einer Umlenkvorrichtung 10. Die erste Ausführungsform 10a ist für eine schmale Förderkette vorgesehen, wie sie beispielsweise aus der DE 10 2011 112 396 A1 bekannt ist. Die Kettenführungen 61; 62 sind für ein nicht angetriebenes Umlenkrad 50 ausgelegt.

Das erste und das zweite Wandelement 21; 22 sind spiegelsymmetrisch bezüglich einer Ebene ausgebildet, die senkrecht zur Drehachse 51 des Umlenkrades 50 verläuft. Die Wandelemente 21; 22 sind beispielsweise aus Aluminium im Druckgussverfahren hergestellt, wobei sie auch aus Stahlblech hergestellt sein können. Die Form des Führungsstegs 23 und der Wandplatte 28 sind so gewählt, dass sie im Wesentlichen identisch nach beiden Verfahren hergestellt werden können. Die genannten Abschnitte sind dementsprechend als im Wesentlichen ebene Platten mit konstanter Dicke ausgebildet, die senkrecht über einen Biegeradius 32 einstückig miteinander verbunden sind. Der Führungssteg 23 besitzt quer zu einer Förderrichtung 11 eine konstante Breite, wobei er geradlinig entlang der Förderrichtung 11 verläuft. Er endet an einer ebenen Stirnfläche 27 des zugeordneten Wandelements 21; 22, die senkrecht zur Förderrichtung 11 ausgerichtet ist.

Gegenüberliegend zur Stirnfläche 27 ist eine kreiszylindrische Lagerbohrung 24 an den Wandelementen 21; 22 vorgesehen. Die Mittelachse der Lagerbohrung 24, welche gleichzeitig die Drehachse 51 des Umlenkrades 50 definiert, ist senkrecht zur Förderrichtung 11 und parallel zur Stirnfläche 27 ausgerichtet. In die beiden Lagerbohrungen 24 wird jeweils von innen her ein Drehlager 52 montiert, welches vorzugsweise als Wälzlager, insbesondere als Radialrillenkugellager ausgebildet ist. Außen an der Lagerbohrung 24 liegt das Drehlager 52 an einem Bund 29 an, der fluchtend mit der Wandplatte 28 angeordnet ist. Um bei geringem Materialverbrauch eine steife Drehlagerung bereitzustellen, sind mehrere Versteifungsrippen 25 zwischen der Lagerbohrung 24 und der Wandplatte 28 vorgesehen.

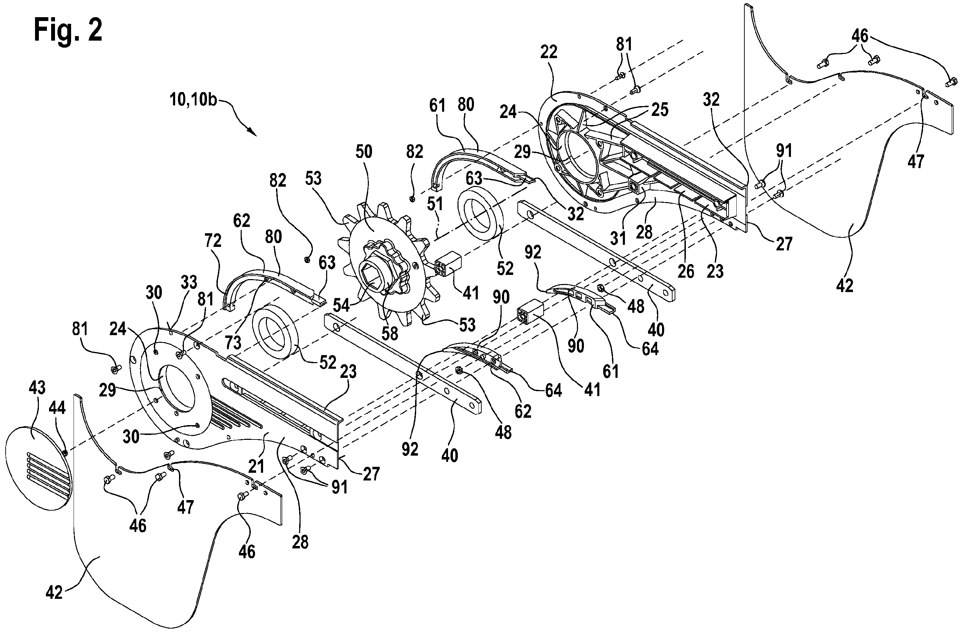

Das Umlenkrad 50 ist vorzugsweise aus Kunststoff im Spritzgussverfahren hergestellt. Es ist in Form eines Zahnrades ausgebildet, d.h. es weist eine Vielzahl von identischen Zähnen 53 auf, die gleichförmig verteilt um die Drehachse 51 herum angeordnet sind. Weiter ist an den beiden gegenüberliegenden Seiten des Umlenkrades 50 je ein kreiszylindrischer Zapfen 58 vorgesehen, der in einem zugeordneten Drehlager 52 drehbar aufgenommen ist. Entlang der Mittelachse der beiden Zapfen 57, die mit der Drehachse 51 zusammenfällt ist ein Antriebsdurchbruch 54 vorgesehen, welcher das Umlenkrad 50 über die gesamte Breite durchsetzt. Der Antriebsdurchbruch 54 weist eine konstante sechseckige Querschnittsform auf, wobei auch andere Querschnittsformen in Betracht kommen, soweit diese von der Kreisform abweichen. Der Antriebsdurchbruch 54 wird bei der zweiten Ausführungsform nach Fig. 2 verwendet, um das Umlenkrad über eine Sechskantwelle in Drehantriebsverbindung mit einem Elektromotor zu bringen. Bei der ersten Ausführungsform nach Fig. 1, die nicht angetrieben wird, könnte der Antriebsdurchbruch 54 auch entfallen, wobei er dennoch vorgesehen ist, damit alle Ausführungsformen möglichst viele Gleichteile aufweisen.

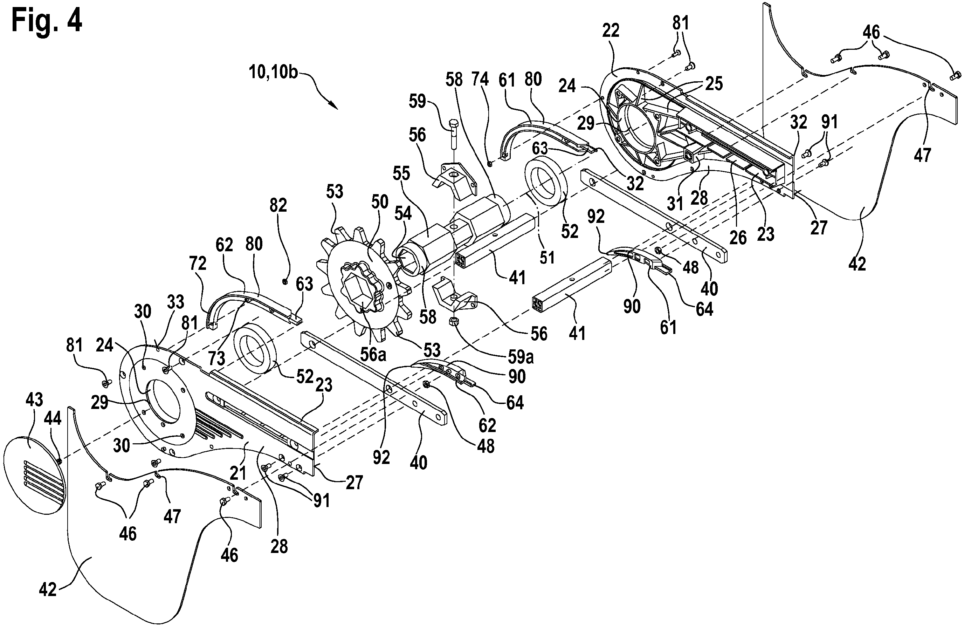

Von außen her ist die Lagerbohrung 25 mit einem gesonderten Deckel 43 abgedeckt, der vorzugsweise aus Kunststoff, beispielsweise Polyamid, besteht. Der Deckel 43 weist mehrere, beispielsweise vier, Rasthaken 44 auf, die in zugeordnete Gewindebohrungen 30 in den Wandelementen 21; 22 eingreifen. Anstelle einer der Deckel 43 kann bei den angetriebenen Ausführungsformen nach Fig. 2 und 4 der Befestigungsflansch eines Elektromotors über die Gewindebohrungen 30 mit einem der Wandelemente 21; 22 verschraubt werden. Welches Wandelement 21; 22 zur Befestigung des Elektromotors verwendet wird, entscheidet der Verwender der Umlenkvorrichtung 10 nach seinen Bedürfnissen.

Innen an den Wandelementen 21; 22 liegt jeweils eine zugeordnete Verbindungsleiste 40 an. Die Wandelemente 21; 22 sind hierfür mit einer angepassten Ausnehmung 26 versehen, deren Breite mit geringem Spiel an die Verbindungsleiste 40 angepasst ist. Die Verbindungsleiste 40 besteht vorzugsweise aus Stahl und erstreckt sich mit einer konstanten, rechteckigen Querschnittsform parallel zur Förderrichtung 11. Sie steht über die Stirnfläche 27 über, damit sie in Eingriff mit dem angrenzenden (nicht dargestellten) Tragprofil für die Förderkette gebracht werden kann. An den beiden Enden ist sie mit Einführschrägen 45 versehen, damit sie einfach in das genannte Tragprofil eingeschoben werden kann. Quer zur Förderrichtung ist die Verbindungsleiste von mehreren Bohrungen bzw. Gewindebohrungen durchsetzt, über die sie mit den Wandelementen 21; 22 bzw. mit dem genannten Tragprofil verschraubt bzw. verklemmt werden kann.

Zwischen den beiden Verbindungsleisten 40 sind beispielsweise zwei Abstandshalter 41 angeordnet, welche den Abstand der beiden Wandelemente 21; 22 definieren, so dass die Kettenführungen 61; 62 seitlich in die (nicht dargestellte) Förderkette eingreifen. Die Abstandshalter 41 sind beispielsweise in Form eines geradlinigen Profilkörpers ausgebildet, der über seine gesamte Länge eine konstante Querschnittsform aufweist. Die Abstandshalter 41 werden vorzugsweise aus Aluminium im Strangpressverfahren hergestellt. Über das Absägen der Stangpress-Rohprofile auf die passende Länge kann der Abstand der Wandelemente 21; 22 flexibel an unterschiedlich breite Förderketten angepasst werden. Hinzuweisen ist noch auf eine Abstandhalteraufnahme 31 an den Wandelementen 21; 22, in die ein weiterer identischer Abstandshalter eingesetzt werden kann, der vorliegend jedoch nicht dargestellt ist.

Die erste und die zweite Kettenführung 61; 62 sind spiegelsymmetrisch ausgebildet und werden jeweils von einem einzigen einstückigen ersten Führungsteil 70 gebildet, welches aus Kunststoff, vorzugsweise Polyoxymethylen besteht. Die Förderkette liegt beim Durchlaufen der Umlenkvorrichtung 10 ausschließlich an den Kettenführung 61; 62 und dem Umlenkrad 50 an. Dabei ist auf den Führungssteg 23 und den ersten und den zweiten Übergangsabschnitt 63; 64 jeweils eine (nicht dargestellte) Gleitleiste aufgeschnappt, die einstückig bis zum sich anschließenden Tragprofil durchgeht. Die Förderkette wird von der Gleitleiste in der gleichen Weise geführt wie von den Kettenführungen 70, jedoch nur auf geradem Weg parallel zur Förderrichtung 11. Die Gleitleiste kann beispielsweise gemäß Gleitprofil der DE 10 2011 112 397 A1 ausgebildet sein.

Der erste Übergangsabschnitt 63 setzt den Führungssteg 23 in Förderrichtung 11 fluchtend fort. Dementsprechend ist seine Querschnittsform identisch zur Querschnittsform des Führungestegs 23 ausgebildet. Insbesondere ist auch der Biegeradius 32 zwischen dem Führungssteg 23 und der Wandplatte 28 zumindest abschnittsweise auch am ersten Übergangsabschnitt 23 vorgesehen, so dass die Gleitleiste diesen hintergreifen kann. Abseits des ersten und des zweiten Übergangsabschnitts 63; 64 weist das erste Führungsteil 70 quer zur Förderrichtung 11 bzw. zur Drehachse 51 eine konstante Dicke auf, die gleich der Dicke der Gleitleiste ist, so dass sich die Führungsgeometrie der Gleitleiste fluchtend auf dem ersten Führungsteil 70 fortsetzt. In der Folge ist die Dicke des ersten und des zweiten Übergangsabschnitts 63; 64 um die Wanddicke der Gleitleiste kleiner als die Dicke des verbleibenden ersten Führungsteils 70.

Auf der dem zugeordneten Wandelement 21; 22 zugewandten Seite weist das erste Führungsteil 70 einen Ausrichtsteg 72 und mehrere Ausrichtzapfen 73 auf. Die Ausrichtzapfen 73 erstrecken sich parallel zur Drehachse 51 und sind vorzugsweise kreiszylindrisch ausgebildet und greifen in angepasste Bohrungen in den Wandelementen 21; 22 ein. Der Ausrichtsteg 72 erstreckt sich entlang der gesamten Länge des ersten Führungsteils 70 vom ersten Übergangsabschnitt 63 zum zweiten Übergangsabschnitt 64, wobei er eine konstante, vorzugsweise rechteckige Querschnittsform aufweist. Dabei liegt er an der schmalen Seitenfläche 33 der Wandplatte 28 an. Damit ist sichergestellt, dass der Verlauf des ersten Führungsteils 70 dem Verlauf der genannten Seitenfläche 33 der Wandelemente 21; 22 genau folgt. Das erste Führungsteil 70 ist über mehrere Befestigungsschrauben 71 mit dem zugeordneten Wandelement 21; 22 verschraubt, welche wahlweise in einer Gewindebohrung im ersten Führungsteil 70 oder in gesonderte Muttern 74 eingreifen, die in das erste Führungsteil 70 eingelegt sind.

Benachbart zum ersten und zweiten Übergangsabschnitt 63; 64 verläuft das erste Führungsteil 70 jeweils geradlinig parallel zur Förderrichtung 11. Im mittleren Bereich 75 verläuft das erste Führungsteil 70 kreisförmig bezüglich der Drehachse 51, wobei der Durchmesser des entsprechenden Kreises deutlich größer als der Abstand des ersten und des zweiten Übergangsabschnitts 63; 64 quer zur Förderrichtung 11 ist. Daher ist zwischen dem mittleren Abschnitt 75 und dem zweiten Übergangsabschnitt 64 ein entgegen dem mittleren Abschnitt 75 gebogener Übergangsabschnitt 76 vorgesehen. Der mittlere Abschnitt 75 und der Übergangsabschnitt 76 gehen knick- und absatzfrei einander über. Der Übergangsabschnitt 76 erstreckt sich über die gesamte Länge des Führungsstegs 23, so dass er einen großen Krümmungsradius aufweisen kann. Im Bereich des zweiten Übergangsabschnitts 64 ist dementsprechend kein Führungssteg 23 an den Wandelementen 21; 22 vorgesehen. Der zweite Übergangsabschnitt 64 endet vielmehr an der Stirnfläche 27. Dabei ist er spiegelsymmetrisch zum Führungssteg 23 ausgebildet.

Zwischen dem mittleren Abschnitt 75 und dem ersten Übergangsabschnitt 63 nimmt die Krümmung der Gleitleiste nach und nach ab, damit die Förderkette sanft in Eingriff mit dem Fördergut oder einem Fördergutträger gelangt.

Fig. 2 zeigt eine Explosionsansicht einer zweiten Ausführungsform 10b einer erfindungsgemäßen Umlenkvorrichtung 10. Die zweite Ausführungsform 10b ist für die gleiche Förderkette vorgesehen wie die erste Ausführungsform 10a nach Fig. 1. Jedoch soll das Umlenkrad 50 mit einem (nicht dargestellten) Elektromotor angetrieben werden. Bis auf die nachfolgend beschriebenen Unterschiede ist die zweite Ausführungsform 10b identisch zur ersten Ausführungsform 10a nach Fig. 1 ausgebildet, so dass insoweit auf die obigen Ausführungen verwiesen wird. Dabei sind gleiche Teile mit den gleichen Bezugsziffern gekennzeichnet.

Die beiden Kettenführungen 61; 62 sind spiegelsymmetrisch zueinander ausgebildet und umfassen jeweils ein zweites und ein gesondertes drittes Führungsteil 80; 90. Das zweite Führungsteil 80 ist gegenüber dem ersten Führungsteil 70 nach Fig. 1 nur derart verkürzt, dass es die Drehachse 51 nur über einen Winkel von 90° umgibt. Nachdem die Förderkette außer Eingriff mit dem zweiten Führungsteil 80 gelangt verläuft sie der Schwerkraft folgend senkrecht nach unten. Dabei bildet sie eine U-förmige Schlaufe, auch Kettensack genannt, deren Form in etwa der Form des Umrisses des Abdeckbleches 42 folgt. Dabei ist das Abdeckblech 42 so ausgelegt, dass die Förderkette auch im ungünstigsten Verschleißzustand von den beiden Abdeckblechen 42 vollständig überdeckt wird. Die Lage der Befestigungsschrauben 81 für das zweite Führungsteil 80 entspricht der Lage der Befestigungsschrauben 71 nach Fig. 1 und ist so gewählt, dass sie bei der zweiten Ausführungsform nahe am Ende des zweiten Führungsteils 80 gelegen ist.

Bei den Abdeckblechen 42 handelt es sich um ebene Platten mit konstanter Dicke, die beispielsweise aus Aluminium oder Stahl bestehen. Die Abdeckplatten 42 sind über mehrere, beispielsweise drei Befestigungsschrauben 46 mit einem zugeordneten Wandelement 21; 22 von außen her verschraubt. Die Befestigungsschrauben 46 durchsetzen dabei eine zum Rand offene L-förmige Ausnehmung 47 in der Abdeckplatte 42. Dementsprechend ist es nicht erforderlich, die Befestigungsschrauben 46 vollständig herauszuschrauben, um die Abdeckplatten 42 zu montieren.

Das dritte Führungsteil 90 ist gerade so lang ausgebildet, dass es sicher am zugeordneten Wandelement 21; 21 befestigt werden kann. Hierfür werden zwei Befestigungsschrauben 91 verwendet, deren Lage der Lage der jeweils zugeordneten Befestigungsschrauben 71 bei der ersten Ausführungsform entspricht. Der zweite Übergangsabschnitt 64 ist dabei genau so angeordnet wie bei der ersten Ausführungsform, d.h. er endet an der Stirnfläche 27 des zugeordneten Wandelements 21; 22. Gegenüberliegend zum zweiten Übergangsabschnitt 64 weist das dritte Führungsteil 90 ein spitz zulaufendes Ende 92 auf, wobei es nach unten gebogen ist, damit die senkrecht von unten einlaufende Förderkette wieder in die Horizontale umgelenkt wird. Die Förderkette bewegt sich dabei vom zweiten Führungsteil 80 kommend in Richtung des dritten Führungsteils 90.

Auch am zweiten und am dritten Führungsteil 80; 90 sind die bereits angesprochenen Ausrichtstege 72 und Ausrichtzapfen 73 vorgesehen, welche in Ausrichteingriff mit dem zugeordneten Wandelement 20; 21 stehen.

In Fig. 2 ist auf der rechten Seite kein Deckel 43 gezeigt. Dementsprechend soll dort der (nicht dargestellte) Elektromotor am zweiten Wandelement 22 montiert werden, der über eine (nicht dargestellte) Sechskantwelle in den Antriebsdurchbruch 54 des Umlenkrades eingreift, so dass eine Drehantriebsverbindung zwischen dem Elektromotor und dem Umlenkrad 50 besteht.

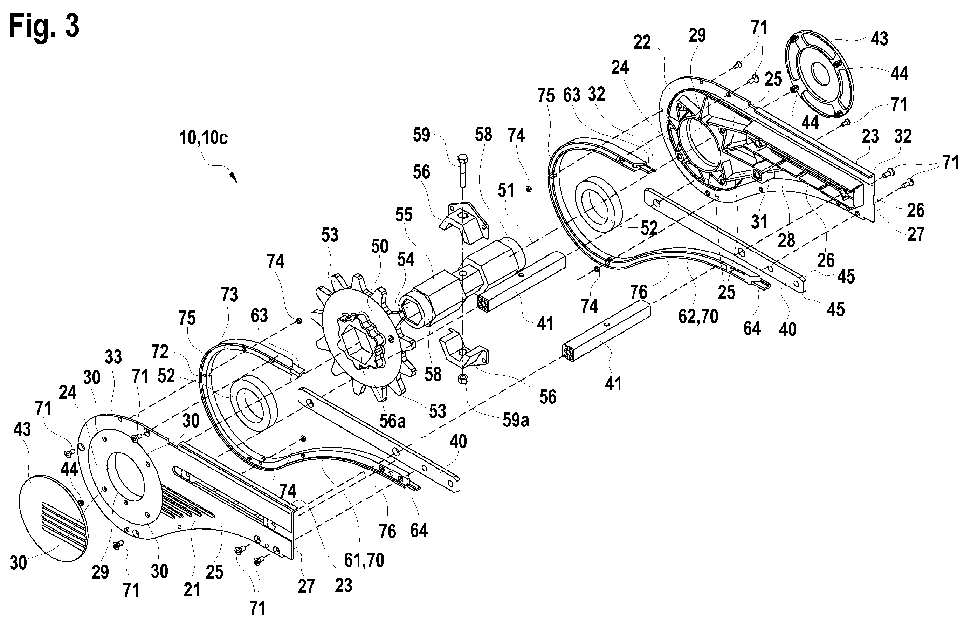

Fig. 3 zeigt eine Explosionsansicht einer dritten Ausführungsform 10c einer erfindungsgemäßen Umlenkvorrichtung 10. Fig. 4 zeigt eine Explosionsansicht einer vierten Ausführungsform 10d einer erfindungsgemäßen Umlenkvorrichtung 10. Die dritte und die vierte Ausführungsform 10c; 10d sind für eine besonders breite Förderkette ausgelegt, welche beispielsweise wie die zweite Ausführungsform der DE 10 2011 112 398 A1 ausgebildet sein kann. Bei der dritten Ausführungsform 10c wird das Umlenkrad 50 wie bei der ersten Ausführungsform) 10a nicht angetrieben. Bei der vierten Ausführungsform 10d wird das Umlenkrad 50 wie bei der zweiten Ausführungsform 10b angetrieben. Bis auf die nachfolgend beschriebenen Unterschiede sind die dritte und die vierte Ausführungsform 10c; 10d identisch zur ersten bzw. zweiten Ausführungsform 10a; 10b ausgebildet, so dass insoweit auf die obigen Ausführungen verwiesen wird. Dabei sind gleiche Teile mit den gleichen Bezugsziffern gekennzeichnet. Die nachfolgenden Ausführungen gelten sowohl für die dritte Ausführungsform 10c nach Fig. 3 als auch für die vierte Ausführungsform 10c nach Fig. 4.

Um die Breite der Umlenkvorrichtung 10 an die größere Breite der Förderkette anzupassen, wurden die Abstandhalter 41 gegenüber der ersten und der zweiten Ausführungsform verlängert, wobei deren Querschnittsform beibehalten wurde. Eine entsprechende Verlängerung der Zapfen 58 an den Umlenkrädern nach Fig. 1 bzw. nach Fig. 2 war aus Festigkeitsgründen nicht möglich. Daher sind bei der dritten und der vierten Ausführungsform 10c; 10d die beiden kreiszylindrischen Zapfen 58 an einer gesonderten Antriebswelle 55 aus Stahl vorgesehen. Entlang der Drehachse 51 wird die Antriebswelle 55 von dem Antriebsdurchbruch 54 durchsetzt, der die gleiche sechseckige Querschnittsform aufweist wie bei der ersten und der zweiten Ausführungsform 10a; 10b. In der Mitte der Antriebswelle 55 sind zwei identische Verbindungsteile 56 mittels einer Befestigungsschraube 59 und einer Mutter 55 an der Antriebswelle 55 befestigt, wobei die Befestigungsschaube 59 die Antriebswelle 55 quer zur Drehachse 51 durchsetzt. Die Verbindungsteile 56 weisen zusammen eine Außenumfangsfläche auf, die im Querschnitt betrachtet sechseckig ausgebildet ist, wobei sie der Sechseckform der verbleibenden Antriebswelle 55 entspricht. Das gesonderte Umlenkrad 50 weist einen angepassten Durchbruch 56a auf, der auf die Verbindungsteile 56 aufgeschoben wird. Wobei die Verbindungsteile 56 fest mit dem Umlenkrad 55 verbunden werden, beispielsweise mittels Schrauben. Die Zähne 53 des Umlenkrades 50 sind bei der dritten und der vierten Ausführungsform identisch zu den Zähnen bei der ersten und der zweiten Ausführungsform 10a; 10b ausgebildet.

Zusammenfassend kann festgestellt werden, dass bei allen vier Ausführungsformen 10a; 10b; 10c; 10d die Wandelemente 20; 21, die Deckel 43, die Verbindungsleiste 40 und das Rohprofil für die Abstandhalter 41 identisch verwendet werden können. Hinsichtlich des Umlenkrades 50 muss nur zwischen einer breiten und einer schmalen Variante unterschieden werden. Hinsichtlich der Kettenführungen 61; 62 nur zwischen einer angetriebenen und einer nicht angetriebenen Variante. Die Form der beiden Varianten Umlenkräder 50 ist so ausgelegt, dass sie in ein und derselben Kunststoff-Spritzgussform hergestellt werden kann, die mit einem kostengünstigen Formeinsatz an die beiden Varianten angepasst wird. Die Umlenkvorrichtung 10 kann daher trotz der großen Variantenvielfalt kostengünstig hergestellt werden.

### Bezugszeichenliste

- 10: Umlenkvorrichtung
- 10a: Umlenkvorrichtung (erste Ausführungsform)
- 10b: Umlenkvorrichtung (zweite Ausführungsform)
- 10c: Umlenkvorrichtung (dritte Ausführungsform)
- 10d: Umlenkvorrichtung (vierte Ausführungsform)
- 11: Förderrichtung

- 21: erstes Wandelement
- 22: zweites Wandelement
- 23: Führungssteg
- 24: Lagerbohrung
- 25: Versteifungsrippe
- 26: Ausnehmung für Verbindungsleiste
- 27: Stirnfläche
- 28: Wandplatte
- 29: Bund
- 30: Gewindebohrung
- 31: Abstandhalteraufnahme
- 32: Biegeradius
- 33: schmale Seitenfläche

- 40: Verbindungsleiste
- 41: Abstandhalter
- 42: Abdeckplatte
- 43: Deckel
- 44: Rasthaken
- 45: Einführschräge
- 46: Befestigungsschraube für Abdeckplatte
- 47: L-förmige Ausnehmung
- 48: Mutter
- 50: Umlenkrad
- 51: Drehachse
- 52: Drehlager
- 53: Zahn
- 54: Antriebsdurchbruch
- 55: Antriebswelle
- 56: Verbindungsteil
- 56a: Durchbruch
- 57: Befestigungsschraube für Verbindungsteil
- 58: Zapfen
- 59: Befestigungsschraube
- 59a: Mutter

- 61: erste Kettenführung
- 62: zweite Kettenführung
- 63: erster Übergangsabschnitt
- 64: zweiter Übergangsabschnitt

- 70: erstes Führungsteil
- 71: Befestigungsschraube für erstes Führungsteil
- 72: Ausrichtsteg
- 73: Ausrichtzapfen
- 74: Mutter
- 75: mittlerer Bereich des ersten Führungsteils
- 76: Übergangsabschnitt

- 80: zweites Führungsteil
- 81: Befestigungsschraube für zweites Führungsteil
- 82: Mutter
- 90: drittes Führungsteil
- 91: Befestigungsschraube für drittes Führungsteil
- 92: spitz zulaufendes Ende

## Patentansprüche

1. Kollektion von zwei Umlenkvorrichtungen (10; 10a; 10b; 10c; 10d) für eine Förderkette, wobei beide Umlenkvorrichtungen (10a; 10b; 10c; 10d) jeweils zwei gegenüberliegende Wandelemente (21; 22) aufweisen, zwischen denen ein Umlenkrad (50), welches zum Eingriff mit der Förderkette ausgebildet ist, bezüglich einer Drehachse (51) drehbar gelagert ist, wobei zwei aufeinander zu weisende, gesonderte Kettenführungen (61; 62) vorgesehen sind, welche fest mit einem zugeordneten Wandelement (21; 22) verbunden sind, wobei sie seitlich in die Förderkette eingreifen, wobei an beiden Enden der beiden Kettenführungen (61; 62) ein erster bzw. ein zweiter Übergangsabschnitt (63; 64) vorgesehen ist, wobei an dem zugeordneten Wandelement (21; 22) ein Führungssteg (23) einstückig vorgesehen ist, welcher den ersten Übergangsabschnitt (63) fluchtend und geradlinig bis zu einer Stirnfläche (27) des zugeordneten Wandelements (21; 22) fortsetzt, wobei er eine Förderrichtung (11) definiert, die senkrecht zur Drehachse (51) ausgerichtet ist, wobei die Dicke des ersten und des zweiten Übergangsabschnitts (63; 64) quer zur Förderrichtung (11) kleiner als die Dicke der verbleibenden Kettenführung (61; 62) ist, wobei der zweite Übergangsabschnitt (64) an der Stirnfläche (27) des zugeordneten Wandelements (20; 21) endet, wobei er spiegelbildlich zum Führungssteg (23) ausgebildet ist,
wobei bei der einen Umlenkvorrichtung (10a; 10c) beide Kettenführungen (61; 62) jeweils ein einziges erstes Führungsteil (70) umfassen, an dem der erste und der zweite Übergangsabschnitt (63; 64) einstückig ausgebildet sind, wobei das erste Führungsteil (70) die Drehachse (51) des Umlenkrades (50) ununterbrochen umgibt,
wobei bei der anderen Umlenkvorrichtung (10b; 10d) beide Kettenführungen (61; 62) jeweils ein zweites und ein gesondertes drittes Führungsteil (80; 90) umfassen, wobei der erste Übergangsabschnitt (63) am zweiten Führungsteil (80) und der zweite Übergangsabschnitt (64) am dritten Führungsteil (90) einstückig ausgebildet sind, wobei das zweite und das dritte Führungsteil (80; 90) mit Abstand zueinander enden,
wobei bei beiden Umlenkvorrichtungen (10; 10a; 10b; 10c) die Wandelemente (20; 21) und das Umlenkrad (50) einschließlich der Drehlagerung identisch ausgebildet sind.

2. Kollektion nach Anspruch 1,
wobei das Umlenkrad (50) der anderen Umlenkvorrichtung (10b; 10d) ein Zahnrad ist, welches in Drehantriebsverbindung mit einem Elektromotor steht.

3. Kollektion nach einem der vorstehenden Ansprüche,
wobei das zweite Führungsteil (80) der anderen Umlenkvorrichtung (10b; 10d) die Drehachse über einen Winkel von 90° umgibt.

4. Kollektion nach einem der vorstehenden Ansprüche,
wobei das dritte Führungsteil (90) der anderen Umlenkvorrichtung (10b; 10d) in Richtung der Drehachse (51) betrachtet außerhalb des äußersten Umrisses des Umlenkrades (50) endet.

5. Kollektion nach einem der vorstehenden Ansprüche, wobei
das dritte Führungsteil (90) der anderen Umlenkvorrichtung (10b; 10d) an dem dem zweiten Übergangsabschnitt (64) gegenüberliegenden Ende spitz zulaufend ausgebildet ist.

6. Kollektion nach einem der vorstehenden Ansprüche,
wobei an beiden Wandelementen (20; 21) der beiden Umlenkvorrichtungen (10; 10a; 10b; 10c; 10d) jeweils eine gesonderte Verbindungsleiste (40), vorzugsweise innen, anliegt, welche über die Stirnfläche (27) des zugeordneten Wandelements (20; 21) übersteht.

7. Kollektion nach Anspruch 6,
wobei zwischen den beiden Verbindungsleisten (40) wenigstens ein, vorzugsweise zwei, gesonderte Abstandhalter (41) angeordnet sind.

8. Kollektion nach einem der vorstehenden Ansprüche,
wobei an beiden Wandelementen (21; 22) der anderen Umlenkvorrichtung (10b; 10d), vorzugsweise außen, jeweils eine gesonderte Abdeckplatte (42) befestigt ist, welche quer zur Drehachse (51) zumindest im Bereich des Abstands zwischen dem zweiten und dem dritten Führungsteil (70; 80) über das zugeordnete Wandelement (21; 22) übersteht.

## Claims

1. Collection of two deflecting devices (10; 10a; 10b; 10c; 10d) for a conveying chain, wherein the two deflecting devices (10a; 10b; 10c; 10d) each have two opposite wall elements (21; 22), between which a deflecting wheel (50), which is designed for engagement with the conveying chain, is mounted such that it can be rotated in relation to an axis of rotation (51), wherein two separate chain guides (61; 62), oriented towards one another, are provided, said chain guides being fixed to an associated wall element (21; 22), wherein they engage laterally in the conveying chain, wherein a first and a second transition portion (63; 64) is provided at the two ends of the two chain guides (61; 62), wherein a guide crosspiece (23) is provided in one piece on the associated wall element (21; 22), said guide crosspiece continuing the first transition portion (63) in an aligned and rectilinear manner as far as an end surface (27) of the associated wall element (21; 22), wherein it defines a conveying direction (11) which is oriented perpendicularly to the axis of rotation (51), wherein the thickness of the first and of the second transition portions (63; 64) in a direction transverse to the conveying direction (11) is smaller than the thickness of the remaining chain guide (61; 62), wherein the second transition portion (64) terminates at the end surface (27) of the associated wall element (20; 21), wherein said second transition portion is formed in a mirror-inverted manner in relation to the guide crosspiece (23),
wherein, in the case of the one deflecting device (10a; 10c), the two chain guides (61; 62) each comprise a single first guide part (70), on which the first and the second transition portions (63; 64) are formed in one piece, wherein the first guide part (70) surrounds the axis of rotation (51) of the deflecting wheel (50) without interruption,
wherein, in the case of the other deflecting device (10b; 10d), the two chain guides (61; 62) each comprise a second and a separate, third guide part (80; 90), wherein the first transition portion (63) is formed in one piece on the second guide part (80) and the second transition portion (64) is formed in one piece on the third guide part (90), wherein the second and the third guide parts (80; 90) terminate at a distance from one another,
wherein, in the case of the two deflecting devices (10; 10a; 10b; 10c), the wall elements (20; 21) and the deflecting wheel (50), including the rotary-bearing means, are of identical design.

2. Collection according to Claim 1,
wherein the deflecting wheel (50) of the other deflecting device (10b; 10d) is a gearwheel, which is in rotary-drive connection with an electric motor.

3. Collection according to either of the preceding claims,
wherein the second guide part (80) of the other deflecting device (10b; 10d) surrounds the axis of rotation over an angle of 90°.

4. Collection according to one of the preceding claims,
wherein the third guide part (90) of the other deflecting device (10b; 10d) terminates outside the outermost outline of the deflecting wheel (50), as seen in the direction of the axis of rotation (51).

5. Collection according to one of the preceding claims,
wherein the third guide part (90) of the other deflecting device (10b; 10d) is designed to taper to a point at the end located opposite the second transition portion (64).

6. Collection according to one of the preceding claims,
wherein in each case a separate connecting strip (40) butts, preferably internally, against the two wall elements (20; 21) of the two deflecting devices (10; 10a; 10b; 10c; 10d), said connecting strip projecting beyond the end surface (27) of the associated wall element (20; 21).

7. Collection according to Claim 6,
wherein at least one spacer (41) is, preferably two separate spacers (41) are, arranged between the two connecting strips (40).

8. Collection according to one of the preceding claims,
wherein in each case a separate covering plate (42) is fastened, preferably externally, on the two wall elements (21; 22) of the other deflecting device (10b; 10d), said covering plate projecting beyond the associated wall element (21; 22) in a direction transverse to the axis of rotation (51), at least in the region of the distance between the second and the third guide parts (70; 80).

## Revendications

1. Collection de deux dispositifs de déviation (10 ; 10a ; 10b ; 10c ; 10d) pour une chaîne transporteuse, les deux dispositifs de déviation (10a ; 10b ; 10c ; 10d) présentant chacun deux éléments de paroi opposés (21 ; 22) entre lesquels est supportée à rotation par rapport à un axe de rotation (51) une poulie de renvoi (50) qui est réalisée de manière à s'engager avec la chaîne transporteuse, deux guides-chaînes (61 ; 62) séparés, tournés l'un vers l'autre, qui sont connectés fixement à un élément de paroi associé (21 ; 22), étant prévus, ceux-ci s'engageant latéralement dans la chaîne transporteuse, une première, respectivement une deuxième, portion de transfert (63 ; 64) étant prévues aux deux extrémités des deux guides-chaînes (61 ; 62), une nervure de guidage (23) étant prévue d'une seule pièce au niveau de l'élément de paroi associé (21 ; 22), laquelle prolonge la première portion de transition (63) en alignement et en ligne droite jusqu'à une surface frontale (27) de l'élément de paroi associé (21 ; 22), en définissant une direction de transport (11) qui est orientée perpendiculairement par rapport à l'axe de rotation (51), l'épaisseur de la première et de la deuxième portion de transition (63 ; 64) transversalement à la direction de transport (11) étant inférieure à l'épaisseur du reste du guide-chaîne (61 ; 62), la deuxième portion de transition (64) se terminant au niveau de la surface frontale (27) de l'élément de paroi associé (20 ; 21), en étant réalisée avec une symétrie spéculaire par rapport à la nervure de guidage (23), les deux guides-chaînes (61 ; 62), dans le cas de l'un des dispositifs de déviation (10a ; 10c), comprenant à chaque fois une première partie de guidage unique (70) au niveau de laquelle la première et la deuxième portion de transition (63 ; 64) sont réalisées d'une seule pièce, la première partie de guidage (70) entourant de manière ininterrompue l'axe de rotation (51) de la poulie de renvoi (50),
les deux guides-chaînes (61 ; 62), dans le cas de l'autre dispositif de déviation (10b ; 10d), comprenant à chaque fois une deuxième et une troisième partie de guidage séparée (80 ; 90), la première portion de transition (63) étant réalisée d'une seule pièce au niveau de la deuxième partie de guidage (80) et la deuxième portion de transition (64) étant réalisée d'une seule pièce au niveau de la troisième partie de guidage (90), la deuxième et la troisième partie de guidage (80 ; 90) se terminant à distance l'une de l'autre,
les éléments de paroi (20 ; 21) et la poulie de renvoi (50), y compris le support sur palier rotatif, dans le cas des deux dispositifs de déviation (10 ; 10a ; 10b ; 10c), étant réalisés de manière identique.

2. Collection selon la revendication 1, dans laquelle la poulie de renvoi (50) de l'autre dispositif de déviation (10b ; 10d) est une roue dentée qui est en liaison d'entraînement de rotation avec un moteur électrique.

3. Collection selon l'une quelconque des revendications précédentes, dans laquelle la deuxième partie de guidage (80) de l'autre dispositif de déviation (10b ; 10d) entoure l'axe de rotation sur un angle de 90°.

4. Collection selon l'une quelconque des revendications précédentes, dans laquelle la troisième partie de guidage (90) de l'autre dispositif de déviation (10b ; 10d), vue dans la direction de l'axe de rotation (51), se termine à l'extérieur du pourtour le plus extérieur de la poulie de renvoi (50).

5. Collection selon l'une quelconque des revendications précédentes, dans laquelle la troisième partie de guidage (90) de l'autre dispositif de renvoi (10b ; 10d) est réalisée de manière à se terminer en pointe au niveau de l'extrémité opposée à la deuxième portion de transition (64).

6. Collection selon l'une quelconque des revendications précédentes, dans laquelle, au niveau des deux éléments de paroi (20 ; 21) des deux dispositifs de déviation (10 ; 10a ; 10b ; 10c ; 10d), s'applique à chaque fois une nervure de connexion séparée (40), de préférence intérieure, qui fait saillie au-delà de la surface frontale (27) de l'élément de paroi associé (20 ; 21).

7. Collection selon la revendication 6, dans laquelle entre les deux nervures de connexion (40) sont disposés au moins un, de préférence deux, éléments d'espacement séparés (41).

8. Collection selon l'une quelconque des revendications précédentes, dans laquelle au niveau des deux éléments de paroi (21 ; 22) de l'autre dispositif de déviation (10b ; 10d), de préférence à l'extérieur, est fixée à chaque fois une plaque de recouvrement séparée (42) qui fait saillie transversalement à l'axe de rotation (51) au moins dans la région de l'espacement entre la deuxième et la troisième partie de guidage (70 ; 80) au-delà de l'élément de paroi associé (21 ; 22).
